(19) Europäisches Patentamt
European Patent Office
Office européen des brevets

(11) Publication number: **0 084 829 B1**

# (12) EUROPEAN PATENT SPECIFICATION

(45) Date of publication of patent specification: **13.08.86**

(51) Int. Cl.⁴: **C 08 L 93/00** // C09F1/00, C09J3/26

(21) Application number: **83100312.4**

(22) Date of filing: **15.01.83**

(54) **Emulsifiable resin compositions.**

(30) Priority: **18.01.82 US 340432**

(43) Date of publication of application:
**03.08.83 Bulletin 83/31**

(45) Publication of the grant of the patent:
**13.08.86 Bulletin 86/33**

(84) Designated Contracting States:
**DE FR GB IT NL SE**

(56) References cited:
**DE-A-3 004 185**
**US-A-2 503 772**

(73) Proprietor: **HERCULES INCORPORATED**
**Hercules Plaza**
**Wilmington Delaware 19899 (US)**

(72) Inventor: **Armstead, Joann Carol**
**5 Four Seasons Parkway, No. 11 Strawberry Run Apt.**
**Newark Delaware 19702 (US)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the chemical art. Particularly, this invention relates to essentially water-free resin compositions that are easily and readily emulsifiable in aqueous media, said compositions consisting essentially of a resin having an acid number of from 5 to 30 and a non-ionic emulsifying agent.

U.S. 4,183,834 describes ionizable resinous compositions which are ionized by incorporating into an ionizable resinous mixture a volatile ionizing agent, such as ammonia. The volatile ionizing agent can be removed from the mixture under conditions effective for volatizing water from a latex adhesive formulation. The ionizable resinous mixture used is the reaction product of a rosin, a carboxylic acid and a $C_{1-18}$ monoalcohol. The volatile ionizing agent is added to the resinous mixture to stably disperse the resinous mixture in water and to ionize the resinous mixture prior to the addition of the mixture to a latex.

In accordance with this invention there are provided essentially water-free resin compositions which do not require the addition of a volatile ionizing agent prior to addition to a latex.

Stable resin dispersions are usually prepared (1) by subjecting an unstable oil-in-water emulsion containing the resin material dissolved in a solvent to high shear by means of a homogenizer, (2) by homogenizing under pressure a preheated, unstable, aqueous dispersion containing the resin material, or (3) by an inversion process wherein water, or water containing a protective colloid and a volatile base, is rapidly added to the molten resin under vigorous agitation.

It is highly desirable to have a stable resin composition which does not require the use of water or high speed mixers or homogenizers, or both in its preparation, or the addition of a volatile ionizing agent in order to stably disperse the resinous mixture in water prior to the addition of the mixture to a latex. At the same time, the resulting composition should be readily dispersible in water, or in a water-base latex.

The resin compositions of this invention are useful in the manufacture of water-borne adhesives, particularly water-borne pressure sensitive adhesives.

The compositions of this invention are essentially water-free resin compositions consisting essentially of, by weight:

(a) from 97% to 90% of a resin selected from the group consisting of

 (i) a rosin ester having a melt viscosity from 0.1 Pa . s to 8.5 Pa . s (from 100 centipoise to 8500 centipoise) at 57°C and an acid number of from 5 to 30; and

 (ii) a blend of two or more rosin esters, said blend having a melt viscosity from 0.1 Pa . s to 8.5 Pa . s (100 centipoise to 8500 centipoise) at 57°C and an acid number of from 5 to 30; and

(b) from 3% to 10% of one or more non-ionic emulsifying agents selected from water-soluble compounds of

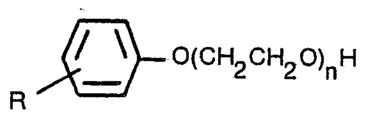

(I) and

$$R'{-}O(CH_2CH_2O)_nH \qquad (II),$$

wherein in formula (I), R is a normal or branched chain alkyl containing from 4 through 18 carbon atoms; wherein in formula (III), R′ is a normal or branched chain alkyl or alkenyl or fused ring cycloalkyl containing from 10 through 20 carbon atoms; and wherein in formulas (I) and (II), n has an average value of from 4 to 9. Preferably the resin compositions will consist essentially of from 96% to 93% resin selected from the group consisting of said compounds (i) and (ii), and from 4% to 7% of emulsifying agent, and preferably the resin will have an acid number of from 7 to 15 and a melt viscosity of from 0.1 Pa.s to 7.5 Pa.s (100 centipoise to 7500 centipoise) at 57°C.

The compositions are prepared by thoroughly admixing or blending the emulsifying agent and the resin until an essentially homogeneous blend is formed. While blending can be carried out at room temperature (23°C.), it is advantageous to carry out the mixing operation at an elevated temperature up to 100°C., preferably from 40°C. to 60°C. for ease of blending.

Resins used as component (a) can be an ester of rosin, such as, for example, the methyl ester of rosin; the methyl ester of hydrogenated rosin; the triethylene glycol ester of rosin; the triethylene glycol ester of hydrogenated rosin; the diethylene glycol ester of rosin; the diethylene glycol ester of hydrogenated rosin; the ethylene glycol ester of rosin and the ethylene glycol ester of hydrogenated rosin, which have a melt viscosity of from 0,1 to 8.5 Pa.s (100 centipoise to 8500 centipoise) at 57°C and an acid number of from 5 to 30.

A blend of two or more rosins can be used as component (a), if desired, provided the blend has the properties set forth above for said component (a). Typical resins used in preparing a blend include rosin;

esters of rosin; modified rosin; esters of modified rosin; low molecular weight polymers and copolymers of hydrocarbon monomers, such as styrene, alpha-methylstyrene, butene-1, isobutylene, butadiene, isoprene, pentene-1, and monomer mixtures formed by cracking petroleum hydrocarbon mixtures; and polyterpene resins.

Suitable rosin esters for forming a blend of two or more resins include the rosin esters above set forth, the glycerol ester of hydrogenated (partially or substantially completely) rosin, the glycerol ester of rosin, the pentaerythritol ester of hydrogenated (partially or substantially completely) rosin, and pentaerythritol ester of refined rosin. Modified rosins which can be used include hydrogenated (partially or substantially completely) rosin and disproportionated rosin.

Suitable polymers and copolymers of hydrocarbon monomers for preparing a blend of two or more resins for use as the resin in the compositions of this invention include alkyl aromatic hydrocarbon resins prepared by polymerizing monomer mixtures formed by cracking petroleum hydrocarbon mixtures; vinyltoluene copolymer resins; low molecular weight styrene and modified styrene resins; and polyterpene resins derived from alpha-pinene, beta-pinene, and monocyclic terpenes such as dipentene.

Rosin used to prepare esters of rosin and modified rosins that can be used in this invention can be any of the commercially available types of rosin such as wood rosin, gum rosin, tall oil rosin, and mixtures thereof in their crude or refined state.

The methyl ester of hydrogenated rosin, the triethylene glycol ester of hydrogenated rosin, the diethylene glycol ester of hydrogenated rosin, the ethylene glycol ester of hydrogenated rosin, and mixtures thereof with each other or with the glycerol ester of hydrogenated (partially or substantially completely) rosin are preferred for use as resin component (a).

Representative resins and resin blends having melt viscosities from 0.1 Pa.s to 8.5 Pa.s (100 centipoise to 8500 centipoise) at 57°C and an acid number of from 5 to 30 are shown in Table I.

TABLE I

| Resin and Resin Blends | Viscosity at 57°C., cps[1] (Pa.s; | Acid Number |
|---|---|---|
| Methyl ester of hydrogenated rosin | 150 (0.15) | 7 |
| Triethylene glycol ester of hydrogenated rosin | 1250 (1.25) | 8 |
| Methyl ester of hydrogenated rosin (55%) glycerol ester of hydrogenated rosin (45%) | 3550 (3.55) | 9 |
| Triethylene glycol ester of hydrogenated rosin (65%)/glycerol ester of hydrogenated rosin (35%) | 7320 (7.32) | 9 |

[1] Brookfield Viscosity

Typical non-ionic emulsifying agents used as component (b) to prepare the compositions of this invention are water-soluble compounds represented by the formulas

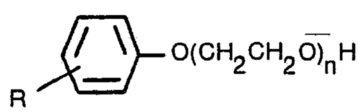

(I) and

$$R'-O(CH_2CH_2O)_nH \quad (II),$$

In formula (I), R is a normal or branched chain alkyl containing from 4 through 18 carbon atoms. Examples of alkyl are butyl, isobutyl, pentyl, neopentyl, hexyl, isohexyl, octyl, nonyl, dodecyl, tetradecyl, hexadecyl and octadecyl.

In formula (II), R' is a normal or branched chain alkyl or alkenyl or fused ring cycloalkyl containing from 10 through 20 carbon atoms, examples of which are decyl, dodecyl (lauryl), tetradecyl, hexadecyl, oleyl, octadecyl, eicosyl, and abietyl or dihydroabietyl. In formulas (I) and (II), n will have an average value of from 4 to 9.

Mixtures of two or more of the emulsifying agents can be used if desired. The preferred emulsifying agent is the ethylene oxide adduct of nonylphenol wherein n has an average value of 4.

The following examples are illustrative of this invention.

Example 1

The methyl ester of hydrogenated rosin (200 g.) of Table I is added to a vessel fitted with a means for stirring the contents. Agitation is started and maintained. The contents of the vessel are heated to 40°C. Surfonic® N—95, a nonionic emulsifying agent commercially available from Texaco Inc. comprising the 4 mole ethylene oxide adduct of nonylphenol, (10 g.) is then added to the vessel. Stirring is continued until a homogeneous blend is formed (for 5 minutes to 15 minutes).

Example 2

A homogeneous blend is prepared in accordance with the procedure of Example 1 with the exceptions that triethylene glycol ester of hydrogenated rosin (200 g.) of Table I is used in place of the methyl ester of hydrogenated rosin and the contents of the vessel are heated to 50°C.

Example 3

The methyl ester of hydrogenated rosin (100 g.) of Table I is added to a vessel fitted with a stirrer. Agitation is started and maintained. The contents of the vessel are heated to 90°C. The glycerol ester of hydrogenated rosin (82 g.) of Table I is then added. When a homogeneous blend of the two resins is formed (after stirring 5 minutes), the blend, which has an A.N. of 9, and a Brookfield viscosity of 3.55 Pa.s (3550 centipoise) at 57°C, is cooled to 60°C. Surfonic® N—95 (9.1 g.) is added to the vessel when the temperature of the resin blend reaches 60°C. Stirring is continued until a homogeneous blend is formed (for 5 minutes to 15 minutes).

Example 4

A homogeneous blend is prepared in accordance with the procedure of Example 3 with exceptions that the triethylene glycol ester of hydrogenated rosin (150 g.) of Table I is used in place of the methyl ester of hydrogenated rosin; and the glycerol ester of hydrogenated rosin (80.77 g.), and Surfonic® N—95 (11.54 g.) is used. The resin blend has an A.N. of 9, and a Brookfield viscosity of 7.32 Pa.s (7320 centipoise) at 57°C.

The emulsifiable resin compositions of the instant invention are viscous fluids at room temperature (23°C.), are storage stable, and can be easily and readily handled. Preferably the compositions contain no water.

The resin compositions of this invention can be used in combination with a latex to form a water-borne adhesive. Typically from 30% to 70% of the emulsifiable resin composition, by dry weight of the latex, is incorporated into the latex. Since the compositions of this invention are readily dispersible in water with mild heat and moderate agitation, it is possible to form an aqueous dispersion thereof either by adding the resin composition to water, or by adding water to the resin composition, to form an aqueous dispersion of from 40% to 65% solids, preferably from 45% to 60% solids. The preferred method of forming an aqueous dispersion of the resin composition of this invention is to add the water to the resin composition. The aqueous dispersion thus prepared can then be blended with a latex to form a resinous latex adhesive. If desired, the resin composition can be added directly to the latex followed by addition of water to the latex adhesive composition if necessary.

Suitable latices include those containing natural rubber and synthetic rubbers or elastomers. Typical synthetic rubbers include styrene-butadiene rubbers (SBR), carboxylated styrene-butadiene rubbers, polyisoprene, acrylonitrile-butadiene rubbers (NBR), polychloroprene (neoprene), polyurethane rubbers (isocyanate), acrylonitrile-butadiene-styrene rubbers ((ABS), and acrylic rubbers. Alternatively, the latex can be derived from the various vinyl latices such as, ethylene vinyl-acetates, ethylene ethylacrylate copolymers, and the like. Latices of natural, styrene-butadiene, carboxylated styrene-butadiene, and acrylic rubbers are preferred.

Example 5

A resin composition (50 g.) prepared in accordance with the procedure of Example 1 is added to a vessel fitted with a means for stirring the contents. Moderate agitation is started and maintained. The vessel is heated until the composition reaches 40°C. Deionized water (50 g.) is then added dropwise to the vessel over a 5 minute period. Stirring is continued until the emulsion is thoroughly mixed.

Example 6

The resin composition (82 g.) prepared in accordance with the procedure of Example 1 is added to a vessel fitted with a means for stirring the contents. Moderate agitation is started and maintained. Deionized water (82 g.) heated to 60°C. is added to the vessel. Stirring is continued until there is provided a stable aqueous emulsion of the resin composition.

Example 7

A natural rubber latex (25 g.) is added to a vessel equipped with a means for stirring. Agitation is started and maintained. The resin emulsion (100 g.) prepared in accordance with the procedure of Example 6 is then added to the vessel. Agitation is continued to ensure adequate mixing (for 10 to 15 minutes). A latex adhesive having 50% solids is formed.

The resinous latex adhesives are useful as pressure sensitive adhesives, contact adhesives, laminating adhesives, and the like. Typically the solids contents in a pressure sensitive adhesive ranges from 40% to 65% solids.

It is to be understood that the above description, including examples, is illustrative of the invention and not in limitation thereof.

**Claims**

1. An essentially water-free resin composition consisting essentially of, by weight:

(a) from 97% to 90% of a resin selected from the group consisting of

(i) a rosin ester having a melt viscosity from 0.1 Pa . s to 8.5 Pa . s (from 100 centipoise to 8500 centipoise) at 57°C and an acid number of from 5 to 30; and

(ii) a blend of two or more rosin esters, said blend having a melt viscosity from 0.1 Pa . s to 8.5 Pa . s (100 centipoise to 8500 centipoise) at 57°C and an acid number of from 5 to 30; and

(b) from 3% to 10% of one or more non-ionic emulsifying agents selected from water-soluble compounds of

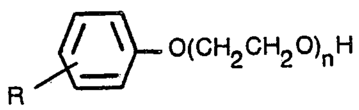

(I) and

$$R'{-}O(CH_2CH_2O)_nH \qquad (II),$$

wherein in formula (I), R is a normal or branched chain alkyl containing from 4 through 18 carbon atoms; wherein in formula (II), R′ is a normal or branched chain alkyl or alkenyl or fused ring cycloalkyl containing from 10 through 20 carbon atoms; and wherein in formulas (I) and (II), n has an average value of from 4 to 9.

2. The composition of Claim 1 wherein (i) is the methyl ester of hydrogenated rosin and wherein the emulsifying agent is the formula (I) compound.

3. The composition of Claim 1 wherein (i) is the triethylene glycol ester of hydrogenated rosin and wherein the emulsifying agent is the formula (I) compound.

4. The composition of Claim 1 wherein (ii) is a blend of 55% of the methyl ester of hydrogenated rosin and 45% of the glycerol ester of hydrogenated rosin, and wherein the emulsifying agent is the formula (I) compound.

5. The composition of Claim 1 wherein (ii) is a blend of 65% of the triethylene glycol ester of hydrogenated rosin and 35% of the glycerol ester of hydrogenated rosin, and wherein the emulsifying agent is the formula (I) compound.

6. The composition of Claims 1, 2, 3, 4 or 5, wherein component (a) is present in an amount of from 96% to 93%, (i) or (ii) has a melt viscosity from 0.1 Pa . s to 7.5 Pa . s (from 100 centipoise to 7500 centipoise) at 57°C., and an acid number of from 7 to 15; and component (b) is present in an amount of from 4% to 7%.

**Patentansprüche**

1. Im wesentlichen wasserfreie Harz-Zusammensetzung, im wesentlichen bestehend aus, bezogen auf das Gewicht,

(a) 97% bis 90% eines Harzes, das aus der aus

(i) einem Colophoniumester mit einer Schmelzviskosität von 0,1 Pa.s bis 8,5 Pa.s (von 100 cP bis 8500 cP) bei 57°C und einer Säurezahl von 5 bis 30 und

(ii) einem Gemisch aus zwei oder mehr Colophoniumester, wobei dieses Gemisch eine Schmelzviskosität von 0,1 Pa.s bis 8,5 Pa.s (von 100 cP bis 8500 cP) bei 57°C und eine Säurezahl von 5 bis 30 aufweist, bestehenden Gruppe ausgewählt ist, und

(b) 3% bis 10% eines oder mehrerer nicht-ionischer emulgierender Mittel, die aus wasserlöslichen Verbindungen

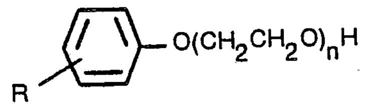

(I) und

$R'-O(CH_2CH_2O)_nH$ (II),

ausgewählt sind, wobei in der Formel (I) R eih normals oder kettenverzweigtes Alkyl mit 4 bis 18 Kohlenstoff-Atomen ist, wobei in der Formel (II) R′ ein normals oder bettenverzweigtes Alkyl oder Alkenyl oder Cycloalkyl.mit anelliertem Ring mit 4 bis Kohlenstoff-Atomen ist und wobei in den Formeln (I) und (II) n einen mittleren Wert von 4 bis 9 besitzt.

2. Zusammensetzung nach Anspruch 1, dadurch gekennzeichnet, daß (i) der Methylester von hydriertem Colophonium ist und das emulgierende Mittel eine Verbindung der Formel (I) ist.

3. Zusammensetzung nach Anspruch 1, dadurch gekennzeichnet, daß (i) der Triethylenglycolester von hydriertem Colophonium ist und das emulgierende Mittel eine Verbindung der Formel (I) ist.

4. Zusammensetzung nach Anspruch 1, dadurch gekennzeichnet, daß (ii) ein Gemisch aus 55% des Methylesters von hydriertem Colophonium und 45% des Glycerinesters von hydriertem Colophonium ist und das emulgierende Mittel eine Verbindung der Formel (I) ist.

5. Zusammensetzung nach Anspruch 1, dadurch gekennzeichnet, daß (ii) ein Gemisch aus 65% des Triethylenglycolesters von hydriertem Colophonium und 35% des Glycerinesters von hydriertem Colophonium ist und das emulgierende Mittel eine Verbindung der Formel (I) ist.

6. Zusammensetzung nach Anspruch 1, 2, 3, 4 oder 5, dadurch gekennzeichnet, daß die Komponente (a) in einer Menge von 96% bis 93% anwesend ist, (i) oder (ii) eine Schmelzviskosität von 0,1 Pa.s bis 7,5 Pa.s (von 100 cP bis 7500 cP) bei 57°C und eine Säurezahl von 7 bis 15 besitzt und die Komponente (b) in einer Menge von 4% bis 7% anwesend ist.

**Revendications**

1. Composition de résine essentiellement exempte d'eau essentiellement constituée, en poids:

(a) de 97% à 90% d'une résine choisie dans le groupe constitué par

(i) un ester de colophane ayant une viscosité à chaud de 0,1 Pa.s à 8,5 Pa.s (de 100 centipoises à 8500 centipoises) à 57°C et un indice d'acide de 5 à 30; et

(ii) un mélange de deux esters de colophane ou davantage, le dit mélange ayant une viscosité à chaud de 0,1 Pa.s à 8,5 Pa.s (100 centipoises à 8500 centipoises) à 57°C et un indice d'acide de 5 à 30; et

(b) de 3% à 10% d'un ou plusieurs agents émulsifiants non ioniques choisis parmi les composés hydrosolubles de

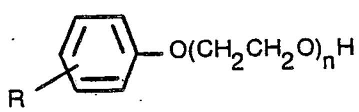

(I) et

$R'-O(CH_2CH_2O)_nH$ (II),

dans lesquels, dans la formule (I), R est un groupe alkyle à chaîne droite ou ramifiée contenant de 4 à 8 atomes de carbone; dans la formule (III), R′ est un groupe alkyle ou alcényle à chaîne droite ou rampfiée ou un groupe cycloalkyle à noyaux condensés contenant de 10 à 20 atomes de carbone; et dans lesquels, dans les formules (I) et (II), n a une valeur moyenne de 4 à 9.

2. Composition selon la revendication 1, dans laquelle (i) est l'ester méthylique de colophane hydrogénée et dans laquelle l'agent emulsifiant est le composé de formule (I).

3. Composition selon la revendication 1, dans laquelle (i) est l'ester de triéthylene-glycol de colophane hydrogénée et dans laquelle l'agent émulsifiant est le composé de formule (I).

4. Composition selon la revendication 1, dans laquelle (ii) est un mélange de 55% d'ester méthylique de colophane hydrogénée, et de 45% d'ester de glycérol de colophone hydrogénée, et dans laquelle l'agent émulsifiant est le composé de formule (I).

5. Composition selon la revendication 1, dans laquelle (ii) est un mélange de 65% d'ester de tri-

éthylène-glycol de colophane hydrogénée et de 35% d'ester de glycérol de colophane hydrogénée, et dans laquelle l'agent émulsifiant est le composé de formule (I).

6. Composition selon les revendications 1, 2, 3, 4 ou 5, dans laquelle le constituant (a) est présent en quantité de 96% à 93%, (i) ou (ii) a une viscosité à chaud de 0,1 Pa.s à 7,5 Pa.s (de 100 centipoises à 7500 centipoises) à 57°C, et un indice d'acide de 7 à 15; et le constituant (b) est présent en quantité de 4% à 7%.